# EUROPEAN PATENT APPLICATION

(11) **EP 4 488 907 A1**
(43) Date of publication of application: **08.01.2025**
(21) Application number: 24177217.7
(22) Date of filing: 22.05.2024
(51) Int. Cl.: G06Q 10/20, G06F 11/07

(54) **REPAIR RECOMMENDATION SYSTEM AND REPAIR RECOMMENDATION METHOD**

(30) Priority: 03.07.2023 JP 2023109029
(71) Applicant: Hitachi, Ltd., Tokyo 100-8280 (JP)
(72) Inventor: HIGUCHI, Ryutaro, Tokyo, 100-8280 (JP); NAKAMURA, Yutaro, Tokyo, 100-8280 (JP); TAKAHIRA, Hiroyuki, Tokyo, 100-8280 (JP); MORISHIGE, Takehiro, Tokyo, 100-8280 (JP); NAKAMATSU, Masafumi, KANAGAWA, 220-6122 (JP)
(74) Representative: MERH-IP Matias Erny Reichl Hoffmann Patentanwälte PartG mbB

(57) **Abstract**

An object of the invention is to enable presentation of information about validity of recommendation information to a user. A repair recommendation system 1 according to an aspect of the invention includes: a repair recommendation engine unit 22 configured to infer, using a learning model 12 that receives failure information about a device and outputs a handling content recommended for handling a failure, recommendation information including a plurality of the handling contents corresponding to the received failure information and a confidence level of each piece of handling information; and an input and output processing unit 21 configured to classify, based on the confidence level, the handling content into any one of a plurality of determination groups provided according to a degree of the confidence level, specify a case resolution rate associated in advance with the determination group in which the handling content is classified, and output, as validity information about the recommendation information, information about magnitude of the specified case resolution rate.

## Description

### Technical Field

The invention relates to a repair recommendation system and a repair recommendation method.

### Background Art

In recent years, artificial intelligence (AI) has been put into practical use in various fields, and for example, in an industrial field, a maintenance support system for equipment and a device using AI technology has appeared. PTL 1 discloses a repair recommendation system that infers, using a machine learning model, recommendation information including a plurality of recommended repairs and a confidence level indicating a degree of confidence of each repair with respect to input information about an event, and outputs an inference result as recommendation information.

### Citation List

### Patent Literature

PTL 1: JP2021-22205A

### Summary of Invention

### Technical Problem

As in the repair recommendation system in PTL 1, in a system that outputs recommended repair information, information such as a Top N accuracy in recommendation information is generally used as an index indicating validity of a learning model. The Top N accuracy is a probability that handling contents output as the recommendation information are among top N handling contents actually performed in a past case (test data) input to the learning model as a test case. As the Top N accuracy, an accuracy of the entire test data input to the learning model is often used.

However, in a practical operation of the repair recommendation system, input information of low quality may be input. Originally, when the quality of the input information is low, that is, when information necessary and sufficient to grasp a symptom of a failure is not contained in the input information, validity of recommended repair information is assumed to be low. However, in the learning model, since the validity is determined based on the Top N accuracy of the entire input test data, the validity cannot be correctly grasped in a case where an inference accuracy is low due to the low quality of the input information.

Thus, even when recommendation information with low validity is presented, when information about the Top N accuracy of the learning model is trusted, a user may order a replacement component or the like output as the recommendation information. As a result, handling of the failure is not appropriately performed, and an event in which the repair is not completed may occur. In addition, when the recommendation system outputs such recommendation information with a low accuracy (validity), trust of the user and customer satisfaction towards the recommendation system may also decrease.

The invention is made in view of the above circumstances, and an object of the invention is to enable presentation of information about validity of recommendation information to a user.

### Solution to Problem

A repair recommendation system according to an aspect of the invention includes: a recommendation calculation unit configured to infer, using a learning model that receives failure information about a device in which a failure occurs and outputs a handling content recommended for handling the failure, recommendation information including a plurality of the handling contents corresponding to the received failure information and a confidence level indicating a degree of confidence of each piece of handling information; and an input and output processing unit configured to classify, based on the confidence level associated with a corresponding piece of the handling information, the handling content into any one of a plurality of determination groups provided according to a degree of the confidence level, specify a case resolution rate associated in advance with the determination group in which the handling content is classified, and output, as validity information about the recommendation information, information about magnitude of the specified case resolution rate.

### Advantageous Effects of Invention

According to at least one aspect of the invention, information about validity of recommendation information can be presented to a user.

Problems, configurations, and effects other than those described above will become apparent in the following description of the embodiment.

### Brief Description of Drawings

FIG. 1 shows a schematic configuration example of a repair recommendation system according to an embodiment of the invention.
FIG. 2 is a block diagram showing a hardware configuration example of a repair recommendation server and a terminal apparatus constituting the repair recommendation system according to the embodiment of the invention.
FIG. 3 shows a configuration example of a replacement component candidate and a confidence level according to the embodiment of the invention.
FIG. 4 shows an overview of a method for calculating a Top N case resolution rate according to the embodiment of the invention.
FIG. 5 shows an overview of a method for calculating a determination coefficient serving as a classification criterion of a determination group and an example of classification into the determination group in a list form according to the embodiment of the invention.
FIG. 6 shows a configuration example of a determination group table according to the embodiment of the invention.
FIG. 7 shows a configuration example of a case resolution rate table according to the embodiment of the invention.
FIG. 8 shows an overview of case resolution rate extraction processing based on recommendation information according to the embodiment of the invention.
FIG. 9 shows a display example of recommendation information displayed on a screen of a terminal apparatus 30 when the Top N case resolution rate is low according to the embodiment of the invention.
FIG. 10 is a sequence chart showing an example of a procedure of repair recommendation processing according to the embodiment of the invention.

### Description of Embodiments

Hereinafter, an example of an aspect for implementing the invention (hereinafter referred to as "embodiment") will be described with reference to the accompanying drawings. The invention is not limited to the embodiment, and various numerical values and the like in the embodiment are examples. In the specification and the drawings, the same components or components having substantially the same functions are denoted by the same reference numerals, and repeated description will be omitted.

### <Configuration of Repair Recommendation System>

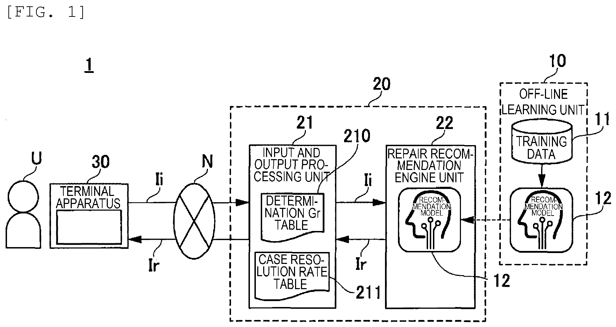

First, a configuration of a repair recommendation system according to the embodiment of the invention will be described with reference to FIG. 1. FIG. 1 shows a schematic configuration example of a repair recommendation system 1 according to the embodiment of the invention.

As shown in FIG. 1, the repair recommendation system 1 includes an off-line learning unit 10, a repair recommendation server 20, and a terminal apparatus 30. The off-line learning unit 10 and the repair recommendation server 20 are apparatuses operated and managed by a company providing a repair recommendation service. The terminal apparatus 30 is an apparatus operated by a user U receiving the repair recommendation service. The repair recommendation service is a service that provides, based on failure information of a device received from the user U, a handling content recommended as handling of a failure. In FIG. 1, a solid arrow indicates a flow of data, a control signal, and the like, and a dashed arrow indicates a direction where information is referred to.

The off-line learning unit 10 includes a learning model (recommendation model) 12 constructed by supervised learning (machine learning) based on training data 11. The training data 11 includes input information and output information selected from device failure history information data. The input information includes failure information indicating a failure state of a device. The output information includes information such as a replacement component of a failed component and a handling method.

By comparing recommendation information as an output of each case of a past event input as the input information with a content of handling actually performed in the event, the learning model 12 determines whether the recommendation information is correct or incorrect. Based on such learning, the learning model 12 infers the recommendation information based on the input information. For learning by the learning model 12, for example, various methods such as a Bayesian network, a support vector machine, and deep learning can be used.

The recommendation information includes information about a plurality of handling contents recommended corresponding to the failure information that is the input information, and information about a confidence level of each handling content. In the following description, a case where the handling content is a replacement component candidate of the failed component will be described as an example. The confidence level of the replacement component candidate as the handling content is an index indicating whether information necessary for recommendation is sufficiently provided when the learning model recommends the handling content from the information input to the repair recommendation system, and has a high value when a word strongly associated with a specific failed component, a specific handling component, or a specific replacement component is provided. The word is, for example, "low pressure" or "o-digit error code", and from a human perspective, is a word that enables identification of the component if a keyword thereof is present.

The repair recommendation server 20 is a so-called application server, and includes an input and output processing unit 21 and a repair recommendation engine unit 22. The repair recommendation engine unit 22 corresponds to a so-called recommendation application, and the trained learning model 12 is deployed in the repair recommendation engine unit 22.

The repair recommendation engine unit 22 (an example of a recommendation calculation unit) outputs output information Ir (recommendation information) based on input information Ii that is transmitted from the terminal apparatus 30 and received by the input and output processing unit 21.

The input and output processing unit 21 performs processing of transmitting, to the repair recommendation engine unit 22 via a network N, the input information Ii transmitted from the terminal apparatus 30. Further, the input and output processing unit 21 refers to a determination group table 210 and a case resolution rate table 211 based on the information about each confidence level of the plurality of replacement component candidates output from the repair recommendation engine unit 22, and acquires information about a case resolution rate corresponding to the recommendation information.

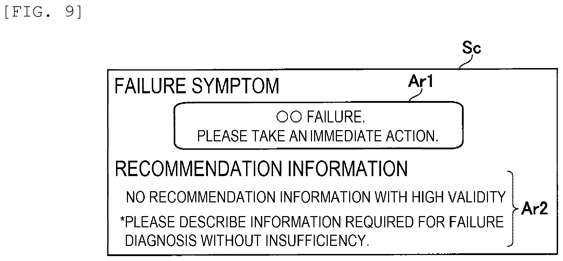

The input and output processing unit 21 generates recommendation validity information according to a degree of the case resolution rate, and transmits the generated recommendation validity information together with the recommendation information to the terminal apparatus 30. The recommendation validity information is information indicating a degree of validity of the recommendation information. The recommendation validity information will be described in detail later with reference to FIG. 9.

The case resolution rate is a ratio of the number of cases in which a repair is completed, that is, an event called a failure is resolved in all test data (past failure cases) input to the learning model 12. Specifically, the case resolution rate is indicated by a ratio (%) of M correct replacement components for solving a device failure contained in top N replacement component candidates in terms of the degree of the confidence level among all the replacement component candidates output as the recommendation information.

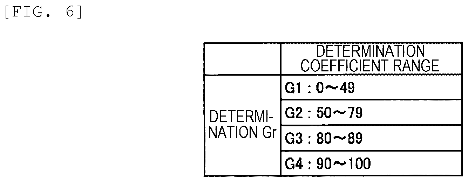

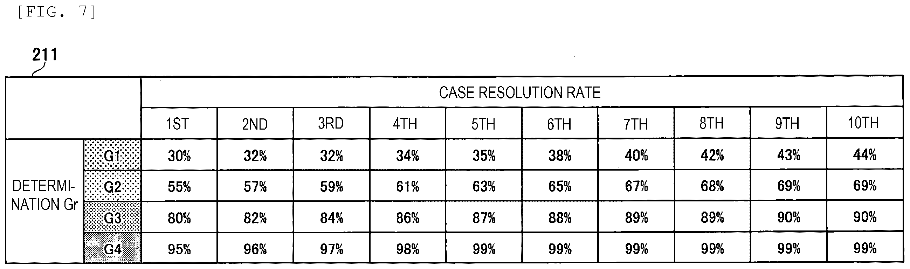

The determination group table 210 (denoted as a determination Gr table in the drawings) stores information about each of a plurality of groups provided according to the degree of the confidence level. The case resolution rate table 211 stores information about the case resolution rate for each determination group. The determination group table 210 will be described later in detail with reference to FIG. 6, and the case resolution rate table 211 will be described later in detail with reference to FIG. 7.

The input information in the training data 11 includes a natural language described in a free format (hereinafter referred to as "free text"). The learning model 12 has a function of analyzing a text in the input information Ii and breaking the text down into words.

The input and output processing unit 21 transmits the replacement component candidate, the recommendation information, and the recommendation validity information as the output information Ir to the terminal apparatus 30.

The terminal apparatus 30 is a terminal operated by the user U, and is, for example, a tablet terminal, a laptop personal computer (PC), or a desktop PC. The user U is an operator or a worker at a site where equipment including a device is located, or a maintenance worker who performs maintenance of the equipment at the site. The terminal apparatus 30 and the repair recommendation server 20 are communicably connected via the network N implemented by an Internet line, a dedicated line, a mobile communication network, or the like.

When a failure or the like of the equipment occurs at the site, the user U inputs failure information about a failed device to the terminal apparatus 30. It is assumed that the failure information includes information about the failed device, description of a failure state, and the like. Then, the information is transmitted from the terminal apparatus 30 to the repair recommendation server 20 as the input information Ii. The recommendation information output as the output information Ir from the repair recommendation server 20 based on the input information Ii from the terminal apparatus 30, or the recommendation information and the recommendation validity information are displayed on a screen of the terminal apparatus 30. The user U refers to the recommendation information, or the recommendation information and the recommendation validity information displayed on the screen of the terminal apparatus 30 to determine a handling method (repair) to be performed. Hereinafter, providing the recommendation information to the user U is also referred to as "recommendation".

It is assumed that the number of replacement component candidates recommended by the repair recommendation server 20 is the top N replacement component candidates among all the replacement component candidates output from the learning model 12 and what is determined in advance in a contract or the like with the user U. "N" in the top N corresponds to "N" in a Top N accuracy. A value of N is determined based on, for example, a degree of a recommendation accuracy expected (targeted) by the user U for the repair recommendation system 1.

The degree of the target recommendation accuracy is determined between the user U and a company providing the repair recommendation service based on an index such as "a probability of repair completion is X% (80% or the like) by using top N (3 or the like) replacement component candidates output as the recommendation information". Here, "repair completion" means that the repair is appropriately performed using a correct replacement component. A value of N, a value of X, and the like used in the index are each set as a target value, and the company providing the repair recommendation service by the repair recommendation system 1 constructs the learning model 12 based on the target value.

### <Hardware Configuration Example of Computer>

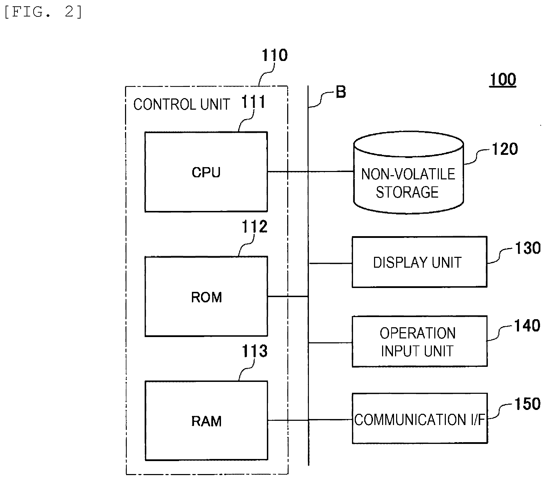

Next, a hardware configuration of each apparatus for implementing a function of a control system of the repair recommendation system 1 shown in FIG. 1 will be described with reference to FIG. 2.

FIG. 2 is a block diagram showing a hardware configuration example of the repair recommendation server 20 and the terminal apparatus 30 constituting the repair recommendation system 1. A computer 100 shown in FIG. 2 is hardware used as a so-called computer.

The computer 100 includes a control unit 110, a non-volatile storage 120, a display unit 130, an operation input unit 140, and a communication interface (I/F) 150, which are connected to a bus B.

The control unit 110 includes a central processing unit (CPU) 111, a read only memory (ROM) 112, and a random access memory (RAM) 113.

The CPU 111 reads, from the ROM 112, a program code of software (application) for implementing each function according to the embodiment, loads the program code into the RAM 113, and executes the program code. The computer 100 may include a processing apparatus such as a micro-processing unit (MPU) instead of the CPU 111. In the RAM 113, variables, parameters, and the like generated during calculation processing are temporarily written.

As the non-volatile storage 120, for example, a hard disk drive (HDD), a solid state drive (SSD), a flexible disk, an optical disk, a magneto-optical disk, a CD-ROM, a CD-R, or a non-volatile memory card can be used. The non-volatile storage 120 stores, in addition to an operating system (OS) and various parameters, a program for causing the computer 100 to function, and the like. The program may be stored in the ROM 112.

The program is stored in a form of a program code readable by the computer, and the CPU 111 sequentially executes operations according to the program code. That is, the ROM 112 or the non-volatile storage 120 is used as an example of a computer-readable non-transitory recording medium that stores the program to be executed by the computer.

Functions of the repair recommendation engine unit 22 and the input and output processing unit 21 of the repair recommendation server 20 are implemented by the CPU 111 by reading the corresponding program code from the ROM 112 or the non-volatile storage 120, loading the program code into the RAM 113, and executing the program code.

Storage areas of the determination group table 210 and the case resolution rate table 211 in the input and output processing unit 21 of the repair recommendation server 20 are implemented by the non-volatile storage 120.

The display unit 130 is, for example, a monitor including a liquid crystal display (LCD), and displays a result of processing performed by the computer 100 and the recommendation information.

The operation input unit 140 includes, for example, a keyboard, a mouse, or a touch sensor, generates an operation signal corresponding to an operation by the user, and supplies the operation signal to the CPU 111.

The display unit 130 and the operation input unit 140 may be integrally implemented as a touch panel. The repair recommendation server 20 may not include the display unit 130 and the operation input unit 140.

As the communication I/F 150, for example, a network interface card (NIC) is used to enable transmission and reception of various types of data to and from another apparatus connected via the network N.

### <Replacement Component Candidate and Confidence Level Contained in Recommendation Information>

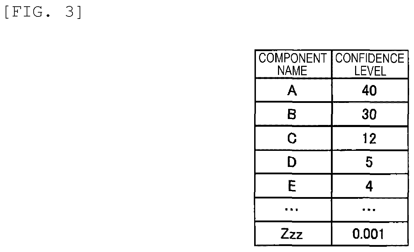

Next, information about the replacement component candidate and the confidence level contained in the recommendation information output from the repair recommendation server 20 to the terminal apparatus 30 will be described. FIG. 3 shows a configuration example of the replacement component candidate and the confidence level.

FIG. 3 shows, in the form of a table, a state in which information about the confidence level is associated with each replacement component candidate output from the repair recommendation engine unit 22. In the table shown in FIG. 3, sets of a component name of the replacement component candidate and the confidence level are arranged and displayed in an upper-lower direction in descending order from a replacement component candidate having a higher associated confidence level. In the recommendation information, recommendation ranks (first, second, and the like) are assigned in order from the replacement component candidate having the highest confidence level.

For example, in a top record in the table shown in FIG. 3, information about a replacement component candidate having the highest confidence level "40" and a component name "component A" is shown, and in a second record, information about a replacement component candidate having the second highest confidence level "30" and a component name "component B" is shown.

As described above, the confidence level is a value indicating the Top N accuracy. The confidence level is a value assigned to all replacement component candidates output as the recommendation information, and has a value of "0" to "100". Therefore, a value obtained by summing up all the confidence levels associated with each replacement component candidate is "100".

The recommendation information is information about a result of inference by the repair recommendation engine unit 22 with failure information input by the user serving as an input. Therefore, it is conceivable that, as quality of the failure information input by the user increases, that is, as the failure information appropriately includes information useful for selecting the replacement component, the confidence level associated with the component increases. Therefore, it can be said that the confidence level is an index indicating a degree of the quality of the failure information input by the user.

### <Method for Calculating Case Resolution Rate>

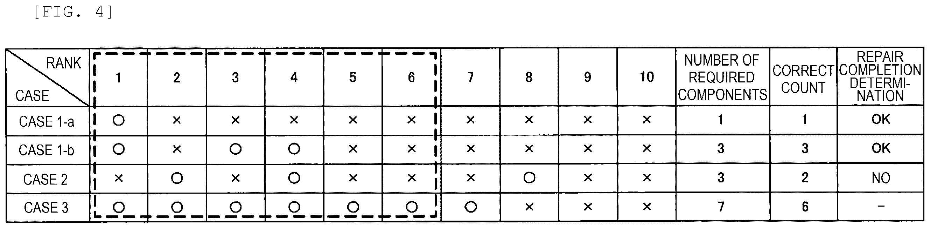

Next, a method for calculating the case resolution rate stored in the case resolution rate table 211 will be described with reference to FIG. 4. FIG. 4 shows an overview of a method for calculating a Top N case resolution rate. In FIG. 4, a determination result of case resolution (repair completion) in each test case received as test data in the repair recommendation engine unit 22 is shown in a form of a table.

Each test case is formed by a case of a failure occurring in the past, and a set of failure information based on a free word actually input to the repair recommendation system and information about the replacement component used for the repair is used as test data of the test case.

In the table shown in FIG. 4, ten replacement component candidates output as the recommendation information in each test case and information about whether each replacement component candidate is a correct component actually used in the repair are shown in association with each other. The information about whether the component is the correct component is indicated by "∘" when the component is the correct component and "×" when the component is not the correct component. In the table shown in FIG. 4, the number of replacement components required for the repair ("number of required components"), a correct count, and a determination result of repair completion determination ( "repair completion determination") in each test case are shown.

The correct count indicates the number of correct replacement components (correct components) actually used for the repair among top N replacement component candidates output as the recommendation information. FIG. 4 shows an example in which "6" is set as "N" of the top N, and in FIG. 4, a range up to top 6 is surrounded by a broken line frame.

In the repair completion determination, completion ("OK") is determined if all of M correct components set as the "number of required components" are contained in the top N ("6" in the example shown in FIG. 4) replacement component candidates in the recommendation information, and incompletion ("NG") is determined if not all of the M correct components are contained therein. In a case where all the correct components of the number set as the "number of required components" are contained in the top N replacement component candidates in the recommendation information, the correct component that is correct is presented as the replacement component candidate, and thus the repair is completed without any problem. Therefore, in the repair completion determination, completion ("OK") is determined.

On the other hand, in a case where not all the correct components of the number set as the "number of required components" are contained in the top N replacement component candidates in the recommendation information, the repair is not completed by the repair based on the recommendation information. Therefore, in the repair completion determination, incompletion ("NG") is determined. Information shown as the table in FIG. 4 is calculated for each type of device.

A "case 1-a" shown in FIG. 4 shows an example in which the number (M) of components required for the repair is one. In the case 1-a, it is indicated that the replacement component candidate contained in a first piece of recommendation information among top 6 replacement component candidates presented as the recommendation information is the correct component. Therefore, the repair completion determination in the case 1-a is "OK".

A "case 1-b" shows an example in which the number (M) of components required for the repair is three. In the case 1-b in which the number of required components is "3", it is indicated that each replacement component candidate, that is, three replacement component candidates contained in a first piece, a third piece, and a fourth piece of recommendation information among top 6 replacement component candidates presented as the recommendation information are correct components. Therefore, the repair completion determination in the case 1-b is also "OK".

Meanwhile, in a case 2 where the number of required components is also "3", it is indicated that each replacement component candidate contained in a second piece and a fourth piece of recommendation information among top 6 replacement component candidates presented as the recommendation information is a correct component. That is, since the number of correct components is "2", which does not reach the number of required components "3", the repair completion determination in the case 2 is "NG".

In a case 3, since the number of required components is "7", not all correct components corresponding to the number of required components are contained in top 6 pieces of the recommendation information. Therefore, such a case is excluded from a target of the repair completion determination.

The Top N case resolution rate is indicated by a ratio of the number of cases of the repair completion determination to the number of all test cases subjected to the repair completion determination. That is, in the example shown in FIG. 4, since the number of cases subjected to the repair completion determination is three, and the number of cases of the repair completion determination is 2, the Top N (= 6) case resolution rate of all the test cases shown in FIG. 4 is 66.66...%.

The information shown in FIG. 4 is calculated for each device to be repaired. Therefore, the Top N case resolution rate is also calculated for each device. FIG. 4 shows an example in which the Top N (= 6) case resolution rate is obtained, and the input and output processing unit 21 calculates the case resolution rate for Top 1 to Top 10 as the Top N case resolution rate.

### <Classification of Determination Group>

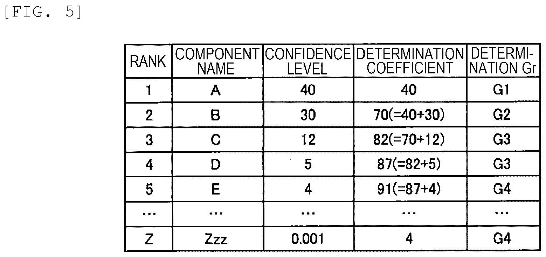

Next, with reference to FIGS. 5 and 6, an example of classification of determination groups provided according to the degree of the confidence level will be described. FIG. 5 shows an overview of a method for calculating a determination coefficient serving as a classification criterion of the determination group and an example of classification into the determination group in a list form, and FIG. 6 shows a configuration example of a determination group table.

In FIG. 5, components output from the repair recommendation engine unit 22 as replacement component candidates required for a repair of a certain failed device are arranged and shown in descending order of the confidence level (from one having a higher recommendation rank). Information about "component name", "confidence level", "determination coefficient", and "determination Gr" is associated with each rank (recommendation rank) shown in FIG. 5.

The "determination coefficient" is indicated by a sum of confidence levels of first to i-th recommendation ranks. For example, since the confidence level of "component A" of the first recommendation rank is "40", and in the case of the first recommendation rank, the rank is "i" = 1, the value of the confidence level "40" is directly input as the determination coefficient of the component (replacement component candidate) of the first recommendation rank.

Since the confidence level of "component B" of the second recommendation rank is "30", "70" is set as the determination coefficient associated with the component B, which is a sum of "40" that is the confidence level of the component (component A) of the first recommendation rank and "30" that is the confidence level of the component B. Similar processing is performed on all components output from the repair recommendation engine unit 22 as the replacement component candidates of the corresponding device. Since the confidence level has a value of "1" to "100", a value of the determination coefficient of a component of a lowest recommendation rank (the confidence level is minimum) is "100".

The confidence level increases as the number of actual records in which the replacement component candidate output as the recommendation information is actually used as a repair component increases. Therefore, it can be said that an accuracy (validity) of recommendation for proposing the replacement component candidates up to the N-th rank increases as the value of the determination coefficient of top N recommendation rank increases. Therefore, the determination coefficient is used as an index indicating validity of the recommendation information in the embodiment.

The "determination Gr" is a group corresponding to each division obtained by dividing the determination coefficient calculated in this manner in a desired range. Information about the determination group is stored in the input and output processing unit 21 as the determination group table 210.

FIG. 6 shows a configuration example of the determination group table 210. In the determination group table 210 shown in FIG. 6, determination coefficients "0" to "49" are classified into a determination group G1, determination coefficients "50" to "79" are classified into a determination group G2, determination coefficients "80" to "89" are classified into a determination group G3, and determination coefficients "90" to "100" are classified into a determination group G4. That is, the determination group G1, which is a group in which a value of the divided determination coefficient is smallest, is a group having a smallest cumulative value of the confidence level and having lowest validity of recommendation. Meanwhile, the determination group G4, which is a group in which the value of the divided determination coefficient is largest, is a group having a largest cumulative value of the confidence level and having highest validity of recommendation.

The number of divisions of the determination group, the value of the determination coefficient serving as the criterion of the division of the determination group, and the like may be changed dynamically according to a situation. For example, a target value may be set in advance for the Top N case resolution rate, and when it is determined that the target value is not reached in an operation stage, the input and output processing unit 21 may change the number of divisions of the determination group or a delimiter of the value of the determination coefficient.

For example, it is assumed that an actual Top N case resolution rate is "75%" while "80%" is set as the target value of the Top N case resolution rate. In this case, the input and output processing unit 21 takes an action such as changing a value of a lower limit determination coefficient of the determination group G3 to a value of 75 or less or increasing the number of determination groups to change a correspondence relationship between the determination group and the case resolution rate. Accordingly, the Top N case resolution rate can reach the target value. By performing such processing, when there is a large difference between a target set by the user U and an actual condition, that is, the degree of the quality of the input information, the repair recommendation server 20 can output the recommendation information with an accuracy corresponding to the actual condition of the user U.

### <Configuration of Case Resolution Rate Table>

Next, a configuration of the case resolution rate table 211 will be described with reference to FIG. 7. FIG. 7 shows a configuration example of the case resolution rate table 211. The case resolution rate table 211 is provided for each device. The device is a device including a failed candidate component contained in the recommendation information output from the repair recommendation system 1.

The case resolution rate table 211 shown in FIG. 7 shows case resolution rates of replacement component candidates contained in 1st to 10th recommendation ranks in each determination group. The case resolution rate stored in the case resolution rate table 211 is the Top N case resolution rate. That is, "1" to "10" in "1st" to "10th" indicated in a row direction in the case resolution rate table 211 correspond to "N" in the Top N case resolution rate.

For example, while a top 1 case resolution rate in the determination group G4 having the highest confidence level is "95%", a top 1 case resolution rate in the determination group G1 having the lowest confidence level is "30%". That is, the case resolution rate table 211 shows the Top N case resolution rate corresponding to the degree of the confidence level assigned to the replacement component candidate, that is, the degree of the quality of the input information (failure information) highly correlated with the confidence level.

### <Overview of Case Resolution Rate Extraction Processing Based on Recommendation Information>

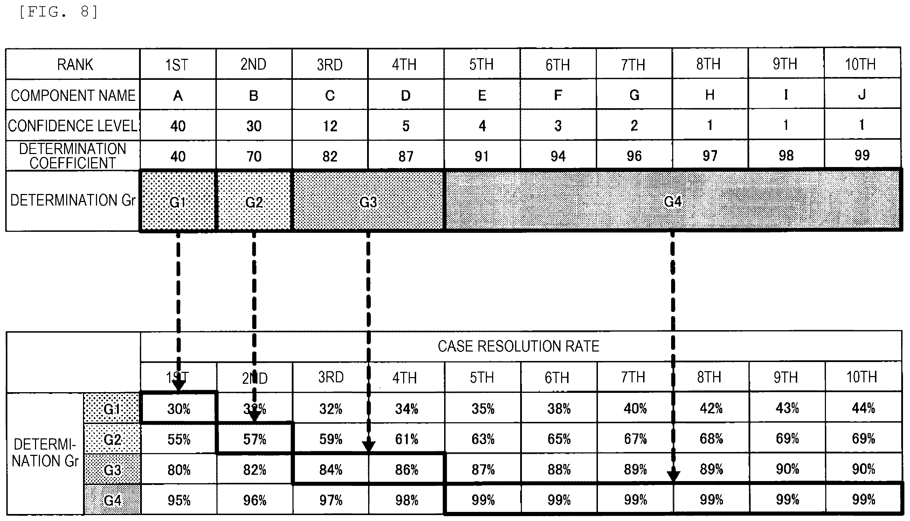

Next, with reference to FIG. 8, an overview of processing in which the input and output processing unit 21 extracts the case resolution rate in a corresponding case based on the recommendation information output from the repair recommendation engine unit 22 will be described. FIG. 8 shows an overview of case resolution rate extraction processing based on the recommendation information.

An upper portion in FIG. 8 shows the confidence level, the determination coefficient, and a classification result of the determination group for each of the replacement component candidates of the 1st to 10th recommendation ranks contained in the recommendation information. The recommendation information shown in the upper portion in FIG. 8 is the recommendation information output from the repair recommendation engine unit 22 when the failure information input by the user using the repair recommendation system 1 serves as the input. In order to facilitate understanding of the description, the component name, the confidence level, and the determination coefficient of each replacement component candidate shown in the upper portion in FIG. 8 have the same values as those in the output when the test data is input as shown in FIG. 4.

When the recommendation information corresponding to the failure information input by the user is output from the repair recommendation engine unit 22, the input and output processing unit 21 extracts, with reference to the case resolution rate table 211 shown in a lower portion in FIG. 8, case resolution rates of top N ranks predetermined for the user. For example, when it is determined to present top 6 failed component candidates as the recommendation information, the input and output processing unit 21 extracts information about the determination group associated with the sixth replacement component candidate. In the example shown in FIG. 8, the determination group associated with the sixth replacement component candidate is the group G4.

Next, the input and output processing unit 21 extracts, from the case resolution rate table 211 shown in the lower portion in FIG. 8, the case resolution rate whose determination group is the group G4 and whose recommendation rank is sixth. In the example shown in the lower portion in FIG. 8, the input and output processing unit 21 can extract "99%" as the case resolution rate.

The input and output processing unit 21 sets a threshold value for the Top N case resolution rate in advance, and when the extracted Top N case resolution rate is equal to or less than the threshold value, the input and output processing unit 21 transmits, to the terminal apparatus 30, the recommendation information including a message or the like indicating that recommendation validity is low. For example, the input and output processing unit 21 can set a criterion in advance such that, as the threshold value, a Top N case resolution rate of 80 or more is "pass", a Top N case resolution rate of 60 to 79 is "conditional pass", and a Top N case resolution rate of 59 or less is "failure".

The input and output processing unit 21 associates a message such as "validity of recommendation information is 60% to 80%" with "conditional pass", and associates a message such as "no recommendation information with high validity" and "please describe information required for failure diagnosis without insufficiency" with "failure".

For example, when the case resolution rate corresponding to top 3 recommendation ranks is a value of 80 or larger, the input and output processing unit 21 transmits, as the recommendation information to the terminal apparatus 30, top 3 replacement component candidates and information about the confidence level of each replacement component candidate.

When the case resolution rate corresponding to the top 3 recommendation ranks is a value within a range of 60 to 79, the input and output processing unit 21 transmits, as the recommendation information to the terminal apparatus 30, the top 3 replacement component candidates, the information about the confidence level of each replacement component candidate, and the message "validity of recommendation information is 60% to 80%".

Further, when the case resolution rate corresponding to the top 3 recommendation ranks is 59 or less, the input and output processing unit 21 transmits, as the recommendation information to the terminal apparatus 30, the message "no recommendation information with high validity" and the message "please describe information required for failure diagnosis without insufficiency".

FIG. 9 shows a display example of recommendation information displayed on a screen of the terminal apparatus 30 when the Top N case resolution rate is low.

A failure information input area Ar1 is provided at an upper portion on a screen Sc shown in FIG. 9, and failure information "oo failure. Please take an immediate action" is input into the failure information input area Ar1. A recommendation information display area Ar2 is provided below the failure information input area Ar1. In the example shown in FIG. 9, in the recommendation information display area Ar2, the message "no recommendation information with high validity" and the message "*please describe information required for failure diagnosis without insufficiency" are displayed.

By displaying such a message, the user can grasp that the quality of the failure information input by the user may be low from the viewpoint of inferring the replacement component candidate by the learning model 12 in the repair recommendation system 1. According to the embodiment, the quality of the failure information input by the user who views such a message can be expected to be improved. Further, since high-quality input information is continuously accumulated in the repair recommendation system 1, it is possible to improve an accuracy of the inference by the learning model 12 in the repair recommendation system 1 and improve the case resolution rate based on the recommendation information.

The message prompting the user to input the failure information with a high accuracy is not limited to the example shown in FIG. 9. For example, the message for prompting the input of the failure information with a high accuracy may include a message notifying that there is not enough information about a symptom of the failure in the input failure information or a message notifying that there is excessive information unnecessary for the failure diagnosis.

### <Repair Recommendation Processing by Repair Recommendation System>

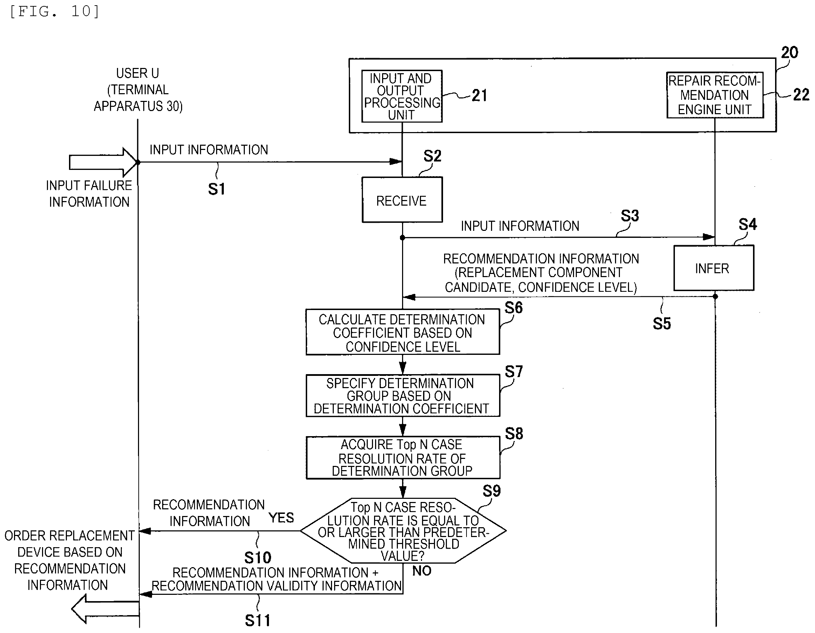

Next, repair recommendation processing by the repair recommendation system 1 will be described with reference to FIG. 10. FIG. 10 is a sequence chart showing an example of a procedure of the repair recommendation processing.

First, when a target device fails, the user U inputs, to the terminal apparatus 30 (see FIG. 1), information (failure information) describing a failure state of the target device. The terminal apparatus 30 transmits the input failure information to the repair recommendation server 20 via the network N (step S1). Next, the input and output processing unit 21 of the repair recommendation server 20 receives the input of the failure information from the terminal apparatus 30 (step S2). Then, the input and output processing unit 21 outputs the received information to the repair recommendation engine unit 22 (step S3).

Next, the repair recommendation engine unit 22 inputs, to the learning model 12, the failure information input as the input information from the input and output processing unit 21, and infers the recommendation information including a plurality of replacement component candidates recommended corresponding to the failure information and the confidence level of each replacement component candidate (step S4) . Next, the repair recommendation engine unit 22 outputs the inferred recommendation information to the input and output processing unit 21 (step S5).

Next, the input and output processing unit 21 calculates the determination coefficient of top N replacement component candidates based on the confidence level contained in the recommendation information (step S6) . Next, the input and output processing unit 21 specifies the determination group based on the determination coefficient calculated in step S6 (step S7). Next, the input and output processing unit 21 acquires the Top N case resolution rate of the determination group specified in step S7 (step S8).

Next, the input and output processing unit 21 determines whether the Top N case resolution rate acquired in step S8 is equal to or larger than a predetermined threshold value (step S9). The threshold value is, for example, "80" set as the criterion of "pass" described above. When it is determined in step S9 that the case resolution rate is equal to or larger than the predetermined threshold value (YES in step S9), the input and output processing unit 21 transmits, to the terminal apparatus 30, the recommendation information output from the repair recommendation engine unit 22 (step S10).

On the other hand, when it is determined in step S9 that the case resolution rate is less than the predetermined threshold value, the input and output processing unit 21 outputs the recommendation validity information together with the recommendation information output from the repair recommendation engine unit 22 (step S11). More specifically, as described with reference to FIG. 9, the input and output processing unit 21 outputs, as the recommendation validity information, a message corresponding to a degree of the case resolution rate.

In the embodiment, an example is described in which the input and output processing unit 21 does not output the recommendation validity information to the terminal apparatus 30 when the case resolution rate is equal to or larger than the predetermined threshold value, but the invention is not limited thereto. Even when the case resolution rate is equal to or larger than the predetermined threshold value, the input and output processing unit 21 may transmit, to the terminal apparatus 30, a message or the like indicating that the validity of the recommendation information is high as the recommendation validity information.

The terminal apparatus 30 displays, on a display apparatus, the recommendation information transmitted from the repair recommendation server 20, or the recommendation information and the recommendation validity information. The user U refers to the recommendation validity information and orders a component that is the replacement component candidate proposed as the recommendation information. A maintenance worker or the like uses the ordered replacement component to repair the failure.

In the above-described embodiment, the input and output processing unit 21 of the repair recommendation server 20 classifies the replacement component candidate contained in the recommendation information output from the repair recommendation engine unit 22 into one of the plurality of determination groups provided according to the degree of confidence level. The input and output processing unit 21 specifies the Top N case resolution rate associated in advance with the determination group in which the replacement component candidate is classified, and outputs information about magnitude of the specified Top N case resolution rate as the validity information of the recommendation information.

For example, when the Top N case resolution rate acquired by the input and output processing unit 21 is low based on the recommendation information output as a result of the inference by the repair recommendation engine unit 22, it is assumed that the quality of the failure information as the input information is low. In the embodiment, in such a case, a message (recommendation validity information) indicating that the validity of the recommendation information is low is transmitted to the terminal apparatus 30. Therefore, according to the embodiment, even when the confidence level associated with the replacement component candidate is high, the user U can grasp that the validity of the recommendation information is low based on the message.

Accordingly, since trust of the user U toward the repair recommendation system 1 is also improved, it is possible to expect continuous use of the repair recommendation system 1 by the user U. Since the number of test cases increases as the user U continuously uses the repair recommendation system 1, an accuracy of the inference by the repair recommendation engine unit 22 can also be improved.

According to the above-described embodiment, when the Top N case resolution rate extracted based on the recommendation information output from the repair recommendation engine unit 22 is low, a message such as "please describe information required for failure diagnosis without insufficiency" is displayed on the screen of the terminal apparatus 30. Accordingly, the user U can grasp that the failure information input by the user U does not include information necessary and sufficient for diagnosis (inference) of the failure. By notifying the user U of such a message, it is possible to improve the quality of the failure information input by the user U, and as a result, the accuracy of the inference by the repair recommendation engine unit 22 can also be improved.

### <Modification>

In the above-described embodiment, an example is described in which the handling content of the failure contained in the recommendation information is the replacement component candidate of the component constituting the failed device, but the invention is not limited thereto. The handling content of the failure may be a handling method for the failure, information about a portion where the failure occurs, or the like. Examples of the handling method for the failure include adjustment, cleaning, foreign matter removal, observation, and component replacement, and the information about the portion is a banknote insertion unit, a passbook insertion unit, a display, and the like.

In the above-described embodiment, the repair recommendation server 20 includes the input and output processing unit 21 and the repair recommendation engine unit 22, but the invention is not limited thereto. For example, the input and output processing unit 21 and the repair recommendation engine unit 22 may be provided on different servers. Alternatively, a part or all of functions of the repair recommendation server 20 may be implemented in the terminal apparatus 30.

In the above-described embodiment, the configurations of the apparatus and the system are specifically described in detail in order to describe the invention in an easy-to-understand manner, and the invention is not necessarily limited to including all the described configurations.

In FIGS. 1 and 2, control lines and information lines indicated by solid lines and arrows are considered to be necessary for explanation, and not all control lines and information lines are necessarily shown in a product. Actually, it may be considered that almost all the configurations are connected to each other.

In the specification, the processing steps describing time-series processing include not only processing performed in time series according to the described order but also processing not necessarily performed in time series but performed in parallel or individually (for example, parallel processing or processing by an object).

### Reference Signs List

- 1: repair recommendation system
- 12: learning model
- 20: repair recommendation server
- 21: input and output processing unit
- 22: repair recommendation engine unit
- 30: terminal apparatus
- 210: determination group table
- 211: case resolution rate table

## Claims

1. A repair recommendation system comprising:
a recommendation calculation unit configured to infer, using a learning model that receives failure information about a device in which a failure occurs and outputs a handling content recommended for handling the failure, recommendation information including a plurality of the handling contents corresponding to the received failure information and a confidence level indicating a degree of confidence of each piece of handling information; and
an input and output processing unit configured to classify, based on the confidence level associated with a corresponding piece of the handling information, the handling content into any one of a plurality of determination groups provided according to a degree of the confidence level, specify a case resolution rate associated in advance with the determination group in which the handling content is classified, and output, as validity information about the recommendation information, information about magnitude of the specified case resolution rate.

2. The repair recommendation system according to claim 1, wherein
the handling contents contained in the recommendation information are each assigned a rank in order from a highest degree to a lowest degree of the associated confidence level, and
the case resolution rate is indicated by a probability that M actually-performed handling contents are contained among top N of the handling contents.

3. The repair recommendation system according to claim 2, wherein
the determination groups are individual groups obtained by dividing a determination coefficient into a predetermined number within a predetermined range, the determination coefficient being obtained by accumulating the confidence level associated with the handling content in descending order of the rank.

4. The repair recommendation system according to claim 3, wherein
when the case resolution rate specified based on the confidence level corresponding to the handling content is equal to or less than a predetermined threshold value, the input and output processing unit outputs the recommendation information and a message that prompts input of information necessary and sufficient for inference of the handling content.

5. The repair recommendation system according to claim 4, wherein
when the case resolution rate associated with the determination group does not reach a predetermined target value, the input and output processing unit adjusts the case resolution rate to match the target value by changing a range of the determination coefficient defining the determination groups and/or the number of divisions of the determination groups.

6. The repair recommendation system according to any one of claims 1 to 5, wherein
the failure information includes a natural language described in a free format, and
the handling content contained in the recommendation information is a replacement component candidate used for repairing the device in which the failure occurs.

7. A repair recommendation method comprising:
inferring, using a learning model that receives failure information about a device in which a failure occurs and outputs a handling content recommended for handling the failure, recommendation information including a plurality of the handling contents corresponding to the received failure information and a confidence level indicating a degree of confidence of each piece of handling information; and
classifying, based on the confidence level associated with a corresponding piece of the handling information, the handling content into any one of a plurality of determination groups provided according to a degree of the confidence level, specifying a case resolution rate associated in advance with the determination group in which the handling content is classified, and outputting, as validity information about the recommendation information, information about magnitude of the specified case resolution rate.
